# FASCICULE DE BREVET EUROPEEN

(11) **EP 1 379 398 B1**
(45) Date de publication et mention de la délivrance du brevet: **09.12.2009**
(21) Numéro de dépôt: 02727651.8
(22) Date de dépôt: 05.04.2002
(51) Int. Cl.: B60C 23/00

(54) **CIRCUIT DE GONFLAGE, EN PARTICULIER D'UN PNEUMATIQUE MONTE SUR UNE ROUE, ET ROUE CORRESPONDANTE**
LUFTAUFBLASANORDNUNG, INSBESONDERE FÜR EINEN AUF EINEM RAD MONTIERTEN REIFEN, UND ENTSPRECHENDES RAD
INFLATION CIRCUIT, IN PARTICULAR FOR A TYRE MOUNTED ON A WHEEL AND CORRESPONDING WHEEL

(30) Priorité: 09.04.2001 FR 0104830
(43) Date de publication de la demande: 14.01.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: MEYDIEU, Michel, F-63100 Clermont-Ferrand (FR); BATTOCCHIO, Claudio, F-63200 Riom (FR)
(74) Mandataire: Bauvir, Jacques
(86) Numéro de dépôt international: PCT/FR2002/001205
(87) Numéro de publication internationale: WO 2002/081235

(56) Documents cités:
- FR-A- 2 699 122
- GB-A- 659 582

## Description

La présente invention a pour objet un circuit de gonflage, en particulier un circuit de gonflage utilisable dans un véhicule. Elle a également pour objet une roue munie d'un tel circuit. Ce circuit de gonflage peut notamment être utilisé pour le gonflage des pneus, même lorsque le véhicule roule. Le but de l'invention est de réduire le prix de ces circuits de gonflage tout en leur conservant l'ensemble de leurs performances.

On connaît des circuits de gonflage permettant de régler la pression dans une chambre d'un pneu, même lorsque ce pneu est monté sur une roue qui tourne dans un véhicule en déplacement. Ces circuits de gonflage comportent un ensemble de conduits et de vannes permettant d'insuffler un fluid, normalement de l'air, dans le pneu pour le gonfler ou au contraire de permettre le dégonflement de ce pneu. Ces circuits de gonflage sont complexes et en général nécessitent des canalisations doubles ainsi que des valves compliquées, doubles, pour pouvoir assurer les deux fonctions. Un exemple d'un tel circuit de gonflage et dégonflage est donné dans le document de brevet FR-A-884 598.

Dans son principe, une valve est un dispositif simple. Lorsqu'elle reçoit une surpression d'un côté, elle autorise le passage d'un fluide dans un sens privilégié. Par contre lorsque la surpression est située de l'autre côté, du côté d'une enceinte fermée par la valve, la valve joue normalement son rôle d'obturateur étanche et empêche les fuites. Il est donc connu que, sans actions extérieures, il n'est pas possible de dégonfler un pneu. Pour arriver à ce résultat, on est alors obligé de prévoir des valves complexes, en elles-mêmes chères et nécessitant en pratique un doublement des canalisations d'amenée et d'évacuation de fluide. Le problème se complique encore du fait qu'une roue étant un organe tournant par rapport à un châssis fixe, la mobilité de ces pièces doit s'accompagner de contraintes de fabrication particulièrement précises pour conserver une étanchéité à long terme et maintenir la pression dans les pneu.

Le document FR-A-2 699 122 présente un circuit de gonflage correspondant au préambule de la revendication 1 dans lequel le clapet anti-retour comporte une valve différentielle.

L'invention a pour but de résoudre ce problème en proposant une solution particulièrement simple, dans laquelle en pratique une seule canalisation conduit d'une source de fluide comprimé, de l'air comprimé en pratique, jusqu'à la chambre, jusqu'au pneu, cette canalisation étant dotée par ailleurs d'un mécanisme particulièrement simple permettant à volonté de gonfler ou de dégonfler le pneu (ou les pneus), même en utilisant une valve simple.

Un principe de l'invention consiste à ménager dans le circuit de gonflage une fuite calibrée. La fuite est aménagée à partir d'un embranchement monté sur la canalisation principale. Cette fuite calibrée est par ailleurs de préférence mise en service, ou neutralisée, par une vanne. On pourra montrer alors que, lors du gonflage, il suffit de fermer la vanne et de gonfler la chambre, de manière classique, jusqu'à la pression voulue. Pour le dégonflage, on provoque un gonflage de durée limitée, par exemple de l'ordre de 1 seconde, puis, en même temps qu'on ferme une vanne située directement en aval de la source de fluide comprimé, on ouvre la vanne de la fuite calibrée. Dans ces conditions, il reste dans le circuit de gonflage une pression telle qu'elle suffit à maintenir ouverte la valve de gonflage, bien que la pression dans le pneu soit supérieure à la pression dans le circuit. Dans ces conditions le pneu se dégonfle.

L'air s'évacue par la fuite calibrée de sorte que la pression dans le pneu et la pression dans le circuit de gonflage/dégonflage décroissent simultanément et progressivement. En pratique, le dégonflage peut être assez long, de l'ordre de 60 à 200 secondes. Un tel dégonflage lent a deux avantages, d'une part il existe. Ce qui fait qu'il est possible, lorsqu'un véhicule roule, de faire baisser la pression de pneus qui seraient surgonflés (en particulier à cause d'un démarrage à froid à pression trop élevée). Il est également possible d'adapter la pression des pneus à différentes conditions de roulage : ville, route, autoroute, pleine charge, à vide, sur sable, et ainsi de suite. D'autre part ce dégonflage lent permet de réguler très facilement la pression du pneu au moment de son dégonflage pour qu'elle aboutisse à une pression désirée. On montrera par ailleurs que la solution de l'invention est particulièrement utile pour permettre une mesure de la pression régnant dans le pneu. De ce fait, avec une installation particulièrement simple on aboutit à obtenir toutes les performances désirées d'un circuit de gonflage.

Selon l'invention, pour résoudre alors un problème de coût et de complexité de l'équipement, la valve à clapet anti-retour comporte un bouchon flottant, une pastille flottante, formant une valve différentielle libre.

La pastille est de préférence en caoutchouc. Au dégonflage, tant que les pressions de part et d'autre du bouchon sont proches l'une de l'autre, le bouchon flotte et la valve libre est ouverte. Si elles sont trop différentes, le bouchon flottant vient se plaquer contre un sommet d'un alésage d'évacuation et ferme la valve.

L'invention concerne donc un circuit de gonflage comportant une source de fluide comprimé, un conduit d'amenée du fluide comprimé, ce conduit étant relié à la source, un clapet anti-retour Interposé dans le conduit d'amenée entre une chambre de réception à gonfler et la source de fluide, un embranchement relié au conduit d'amenée, entre le clapet anti-retour et la source, un conduit de diversion relié à l'embranchement, et un dispositif de fuite calibrée relié au conduit de diversion pour réaliser une fuite calibrée de fluide comprimé à partir de l'embranchement, **caractérisé en ce que** le clapet anti-retour comporte une valve différentielle libre.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une représentation schématique d'un circuit de gonflage selon l'invention ;
- Figure 2 : un exemple préféré de montage d'un clapet anti-retour dans une roue d'un véhicule ;
- Figures 3a, 3b et 4a, 4b : des représentations en coupe d'une valve, ne correspondant pas à l'invention, bidirectionnelle à piston et à poussoir formant clapet anti-retour dans un état fermé et dans un état ouvert respectivement ;
- Figure 5 : une représentation en coupe d'une valve, selon l'invention, bidirectionnelle à clapet anti-retour simple, ou autrement dit d'une valve différentielle libre, coupé selon la coupe AA à la figure 6;
- Figure 6 : un détail en vue suivant F à la figure 5 d'une réalisation préférée d'une valve différentielle libre.

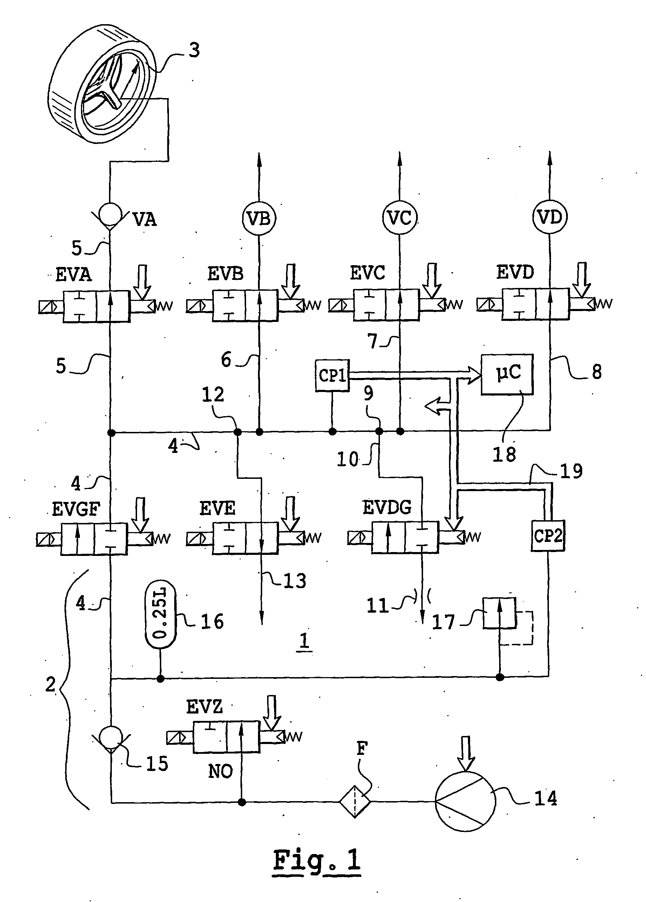

La figure 1 montre un circuit de gonflage 1 selon l'invention. Ce circuit 1 comporte une source 2 de fluide comprimé, en pratique d'air comprimé. Le circuit 1 permet d'alimenter une chambre 3 de réception. La chambre 3 est par exemple celle réalisée à l'endroit d'un pneu d'un véhicule. Le circuit 1 comporte en outre un conduit 4 d'amenée de fluide comprimé. Ce circuit 1 peut être, selon l'invention, particulièrement simple et comporter notamment une seule canalisation conduisant de la source 2 à la chambre de réception 3. Autrement, le conduit d'amenée 4 peut, notamment si le véhicule comporte plusieurs pneus, disposer d'autant de branches 5 à 8 qu'il y a de chambres indépendantes. Entre chaque chambre de réception 3 et la source 2, dans le conduit d'amenée 4 ou dans les branches 5 à 8 est interposé un clapet anti-retour. Par exemple un clapet antl-retour VA est interposé dans la branche 5 entre la chambre 3 et la source 2. Il en est de même des clapets anti-retour VB, VC, VD pour les branches 6, 7 et 8.

Ces clapets anti-retour pourront, comme on le verra par la suite, être du type valve bidirectionnelle à piston et à poussoir ou selon l'invention du type valve bidirectionnelle à clapet anti-retour simple, ou plus exactement à valve différentielle libre,

Selon une caractéristique essentielle de l'invention, le conduit d'amenée 4 comporte un embranchement 9 relié au conduit d'amenée 4, entre le clapet anti-retour VA et la source 2. Ici, relié entre le clapet anti-retour VA et la source 2 veut dire que l'embranchement 9 reçoit un fluide à la même pression qu'un clapet anti-retour VA concerné, lorsque ce clapet est sollicité. Un conduit de diversion 10 est relié à l'embranchement 9. Le conduit de diversion 10 possède un dispositif 11 de fuite calibrée pour réaliser une fuite calibrée de fluide comprimé à partir de l'embranchement. Cette fuite calibrée est par exemple réalisée sous la forme d'un simple pincement d'un conduit.

Le circuit d'amenée 4 est par ailleurs agrémenté d'un certain nombre de vannes permettant de le perfectionner et notamment de permettre l'indépendance du gonflage des différents pneus. Ainsi- des électrovannes EVA, EVB, EVC et EVD sont montées en série dans les branches 5 à 8. Elles permettent d'isoler, indépendamment les uns des autres, les clapets anti-retour VA, VB, VC et VD du conduit d'amenée 4. Les électrovannes EVA, EVB, EVC et EVD sont des électrovannes du type normalement ouvertes, c'est-à-dire qu'elles laissent passer le fluide, dans un sens ou dans un autre, lorsqu'elles ne reçoivent pas un ordre positif. Lorsqu'elles reçoivent un ordre positif, elles sont fermées.

Sur le conduit d'amenée 4 est par ailleurs de préférence installée, entre la source d'air comprimé 2 et les clapets anti-retour VA à VD, une électrovanne de gonflage EVGF du type normalement fermée. Le symbole retenu sur la figure 1 montre en effet que la vanne EVGF présente au conduit 4 un tiroir fermé, et non pas un tiroir passant. Par ailleurs, à un embranchement 12 relié au circuit amené 4 est relié un conduit d'échappement 13 par l'intermédiaire d'une électrovanne d'échappement EVE du type normalement ouverte. Dans le conduit de diversion 10, entre l'embranchement 9 et le dispositif de fuite calibrée 11, est installée une électrovanne de dégonflage EVDG du type normalement fermée, permettant dans un cas préféré de mettre en service, ou non, la fuite calibrée 11.

La source d'air comprimé 2 est elle-même réalisée, d'une manière préférée, à partir d'un compresseur 14 relié par un filtre F et un clapet anti-retour 15 au conduit d'amenée 4 en passant par la vanne EVGF. Une électrovanne EVZ de mise à l'air libre, de type normalement ouverte, est montée sur un embranchement libre entre le compresseur 14 et le clapet anti-retour 15. La source d'air comprimé comporte en outre un réservoir 16, de 250 cl dans un exemple, relié librement au conduit 4 en amont de la vanne de gonflage EVGF. Cette partie du conduit 4 en amont de la vanne EVGF comporte par ailleurs une soupape de sécurité 17 ainsi qu'un capteur de pression CP2. En aval de la vanne de gonflage EVGF est monté librement sur le conduit d'amenée 4 un capteur de pression CP1. Le capteur CP1 permet de mesurer la pression dans la chambre 3, le capteur CP2 permet de mesurer la pression fournie par le compresseur 14. Avec une vanne supplémentaire, il serait toutefois possible de ne disposer que d'un seul capteur.

Un dispositif de commande, représenté ici schématiquement sous la forme d'un microcontrôleur 18, µC, est relié par un bus 19 d'adresses, de commandes et de données à chacune des électrovannes du circuit ainsi représenté, au compresseur 14 et aux capteurs de pression CP1 et CP2. Les ordres sont montrés sur chacun de ces organes par une flèche montrant un aboutissement du bus 19. Le microcontrôleur 18 est formé dans la pratique d'un microprocesseur, d'une mémoire programme et d'une mémoire de données associées. La plupart du temps un tel circuit 18 se présente sous la forme d'un seul circuit intégré électronique. Le programme enregistré en mémoire programme est normalement enregistré à la fabrication. Il est cependant possible d'avoir des microcontrôleurs programmables. En variante, le travail du microcontrôleur 18 est pris en charge par un microprocesseur général du véhicule.

Le fonctionnement de cet ensemble, conformément à un mode préféré de l'invention, est le suivant. Alors que l'électrovanne EVZ reçoit un ordre positif pour être fermée, l'électrovanne EVGF reçoit un ordre négatif (ou nul) pour rester fermée. Puis le compresseur 14 est mis en marche. Cette mise en marche provoque le gonflage du réservoir 16. La présence de la soupape 17 ainsi que du capteur de pression CP2 permettent de limiter, respectivement d'une manière automatique ou d'une manière commandée par le microcontrôleur 18, la pression d'air contenue dans le réservoir 16. Lorsque cette pression désirée est atteinte, le compresseur 14 est arrêté et la vanne EVZ reçoit un ordre négatif. Elle retourne alors à son état normal où elle met la canalisation en amont du clapet anti-retour 15 à l'air libre. Dans ces conditions la pression du côté amont du clapet 15 baisse brutalement, et le clapet 15 se ferme d'une manière étanche. Le conduit d'amenée 4, dans la partie amont à la vanne EVGF est alors à la pression désirée.

Pour une intervention sur une chambre 3, indépendamment des autres, on sélectionne avec les vannes EVA à EVD la branche 5 à 8 qui doit être alimentée. Par exemple pour alimenter le pneu 3, la vanne EVA reçoit un ordre négatif, reste ouverte, alors que les trois autres vannes sont fermées en recevant un ordre positif. Dans ce cas, seule la branche 5 du circuit d'amenée 4 sera active par la suite. Successivement, avec les vannes EVA à EVD, on peut sélectionner toutes les branches.

Pour gonfler le pneu 3, on commence déjà par fermer la vanne d'échappement EVE, elle bascule en recevant un ordre positif. S'agissant du gonflage, on va par ailleurs de préférence isoler la fuite calibrée 11 en faisant également basculer la vanne EVDG de dégonflage. Puis on ouvre la vanne EVGF, normalement fermée, en lui envoyant un ordre positif. Cet ordre positif est maintenu jusqu'à ce que le capteur de pression CP1 renseigne le microcontrôleur 18 de ce que la pression attendue est atteinte. A ce moment ce microcontrôleur 18 ferme la vanne EVGF. Le gonflage est terminé.

En phase de gonflage, il est toutefois probable que le capteur CP1 n'indique pas la pression réelle dans le pneu, du fait de pertes de charges dues notamment à des étranglements. Pour remédier à ce problème, on prévoit alors de maintenir le gonflage pendant une durée nécessaire pour atteindre une valeur de consigne. Suivant le niveau de pression auquel se trouve le pneu au début du gonflage, on peut déterminer expérimentalement une durée de gonflage au bout de laquelle cette valeur de consigne est censée être atteinte. Le microcontrôleur 18 sert à mémoriser ces valeurs expérimentales et à appliquer comme durée nécessaire une durée de gonflage qui correspond à une durée expérimentale.

En variant, on peut procéder alternativement à des phases de gonflage (ou dégonflage) suivies de phase de mesure de pression (comme on le verra plus loin). On réitère ces opérations autant que nécessaire pour s'approcher de la pression de consigne à atteindre.

On remarquera à cet effet que la vanne EVDG, bien que particulièrement utile, n'est pas complètement indispensable. En effet si le débit de la fuite calibrée est faible, et que par contre la réserve d'air comprimé dans le réservoir 16 est importante, on peut se passer de cette vanne et provoquer un gonflage du pneu 3 en tolérant une fuite 11. Dans tous les cas, à la fin du gonflage le conduit d'amenée 4 est à la pression attendue, de même que la chambre du pneu 3.

Pour fermer le clapet anti-retour VA, en particulier s'il n'y a pas de vanne EVDG sur le conduit 10, on provoque un basculement de la vanne EVE. Ce faisant, on met rapidement à l'air libre la partie du conduit d'amenée 4 en aval de la vanne de gonflage EVGF qui vient d'être fermée. Ce faisant, la pression dans le conduit d'amenée 4 chute brutalement et le clapet anti-retour VA se ferme naturellement.

Le choix des vannes normalement fermées ou normalement ouvertes tel qu'il a été exposé jusqu'ici est particulièrement intéressant parce qu'il permet, lorsque aucune intervention n'est à faire sur les chambres des pneus, de maintenir l'ensemble du circuit à l'air libre, sans pression, et sans consommation d'électricité par les circuits de pilotages parce que tous les éléments à piloter sont au repos.

Pour provoquer le dégonflage du pneu 3, alors que ce pneu 3 a été sélectionné par la vanne EVA, on commence par fermer la vanne EVE de mise à l'air libre. Puis pendant une durée brève, par exemple d'une seconde, on ouvre la vanne EVGF de gonflage puis on la referme. Ce faisant, on provoque une surpression, légère, dans le conduit d'amenée 4. Cette surpression ouvre le clapet VA. Puis, on ouvre également la vanne de dégonflage EVDG en la soumettant à un ordre positif. Du fait de la surpression, le clapet anti-retour VA a été ouvert, permettant la communication entre le conduit d'amenée 4 et la chambre du pneu 3. Du fait de la fuite calibrée 11, la pression dans le conduit d'amenée 4 baisse. Elle baisse cependant lentement, continuant à autoriser par ailleurs l'ouverture du clapet VA et une fuite de l'air contenu dans la chambre du pneu 3.

Cette fuite se produit normalement tant que la pression du pneu 3 n'est que légèrement supérieure à la pression dans le conduit d'amenée 4. En principe, ces deux pressions devraient s'équilibrer. Mais comme la pression dans le conduit d'amenée 4 baisse progressivement, la pression dans la chambre du pneu 3 baisse également progressivement, jusqu'à un dégonflage total si on le désire. Du fait de différences de technologie de fabrication, on montrera qu'un tel dégonflage total est obtenu lorsque la valve est du type bidirectionnel à clapet anti-retour simple ou autrement dit valve différentielle libre. Pour les valves à piston et à poussoir, la présence d'un ressort de fermeture de la valve fait qu'on ne dégonfle pas totalement, mais seulement jusqu'à une pression de un bar environ. Un tel dégonflage est cependant suffisant pour permettre une adaptation à toutes les conditions de roulage possibles.

On a pu mesurer que les durées de dégonflage total en agissant ainsi duraient de l'ordre de 100 à 200 secondes. Si on veut un dégonflage plus rapide, il peut ne pas être possible car il risque d'entraîner la fermeture du clapet VA, et l'arrêt du dégonflage. La taille de la fuite calibrée 11 est donc prévue pour que cette durée soit de cet ordre, pas trop courte. Sur le plan industriel, on choisit une durée de cet ordre, notamment pour qu'elle soit plus grande que 50 secondes. Dans ce cas, il n'y a pas de défaut de fonctionnement, le procédé de dégonflement fonctionne à chaque fois. On comprendra qu'une telle durée n'est pas du tout pénalisante pour un véhicule qui roule pendant de nombreuses heures d'affilée.

Bien entendu, si on cherche à dégonfler juste un peu le pneu, pour que sa pression aboutisse à une pression attendue, à l'aide du capteur de pression CP1 et du microcontrôleur 18 on peut basculer la vanne d'échappement EVE le moment venu, de manière à faire baisser brutalement la pression dans le conduit d'amenée 4. Cette baisse brutale entraîne immédiatement le collage du clapet anti-retour VA et l'arrêt du dégonflage. De préférence, on procède selon les deux variantes exposées ci-dessus.

Avec le circuit tel que montré, on peut par ailleurs réaliser très facilement un contrôle de la pression dans un quelconque des pneus. Pour une telle mesure de pression à titre de contrôle, on sélectionne d'abord celle des vannes EVA à EVD correspondant au pneu à vérifier. Puis on ferme la vanne d'échappement EVE et on laisse fermée la vanne de dégonflage EVDG. On provoque ensuite pendant un court instant, par exemple de l'ordre d'une seconde, l'ouverture de la vanne de gonflage EVGF. Ce faisant, la surpression dans le conduit d'amenée 4 ouvre le clapet anti-retour VA de la chambre du pneu sélectionné et maintient ce clapet VA ouvert faisant alors régner, en particulier au moment de la refermeture de la vanne de gonflage EVGF, dans le conduit d'amenée 4 une pression exactement égale à la pression régnant dans la chambre du pneu 3. Il est possible avec cette mesure de pression d'afficher sur un tableau de bord d'un véhicule une indication pour informer le conducteur de la pression de ses pneus. Ou bien, en fonction d'un programme enregistré dans une mémoire programme du microcontrôleur 18, il est possible de commander une régulation automatique de la pression des pneus à une valeur attendue. Par exemple, on peut prévoir une mesure de la pression de chacun des pneus toutes les dix minutes. On peut par ailleurs stocker les résultats de ces mesures dans une mémoire du microcontrôleur 18. Une action de gonflage ou de dégonflage de chacun de ces pneus peut ensuite être menée si la différence entre une pression mesurée et une pression attendue est plus grande qu'un seuil

Comme on a pu le constater, les différentes vannes présentées, bien que présentes de préférence dans le circuit de gonflage de l'invention, ne sont pas complètement indispensables. Les vannes EVA à EVD ne se justifient que dans la mesure où il y a plusieurs chambres de réception à gonfler ou dégonfler sélectivement. La vanne de gonflage EVGF n'est utile que si on ne sait pas par ailleurs piloter la source de fluide comprimé 2. La vanne d'échappement EVE ne sert qu'en fin de gonflage, si par ailleurs on ne sait pas faire baisser brutalement autrement la pression de la source 2 d'air comprimé. Enfin, la vanne EVDG de dégonflage, lors du gonflage n'est pas nécessaire si le débit de la source de fluide 2 est suffisant pour permettre le gonflage. De même, le réservoir 16 peut être supprimé, et le compresseur 14 pourrait provoquer, sans la vanne EVGF, tous les états de pression et de débit désirés. Dans ce cas, la vanne EVZ pourrait également être supprimée. D'autre part les capteurs de pression CP1 et CP2 peuvent être remplacés par des capteurs de débit dans la mesure où on est capable par ailleurs de se servir d'une information de débit pour en déduire un état des pressions dans les chambres de réception à contrôler. En variante, le capteur de pression CP1 est placé dans la chambre 3. Il transmet sa mesure par induction, à l'aide d'un émetteur inductif incorporé ou d'un émetteur radioélectrique. Dans ce cas, il y aurait autant de capteurs qu'il y aurait de chambres, de roues équipées de pneus gonflés à gérer.

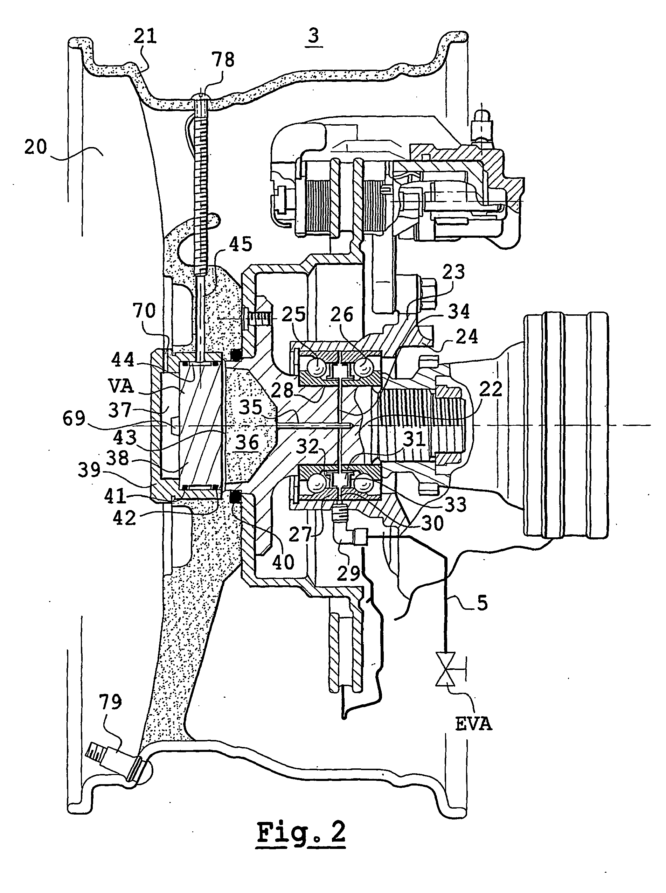

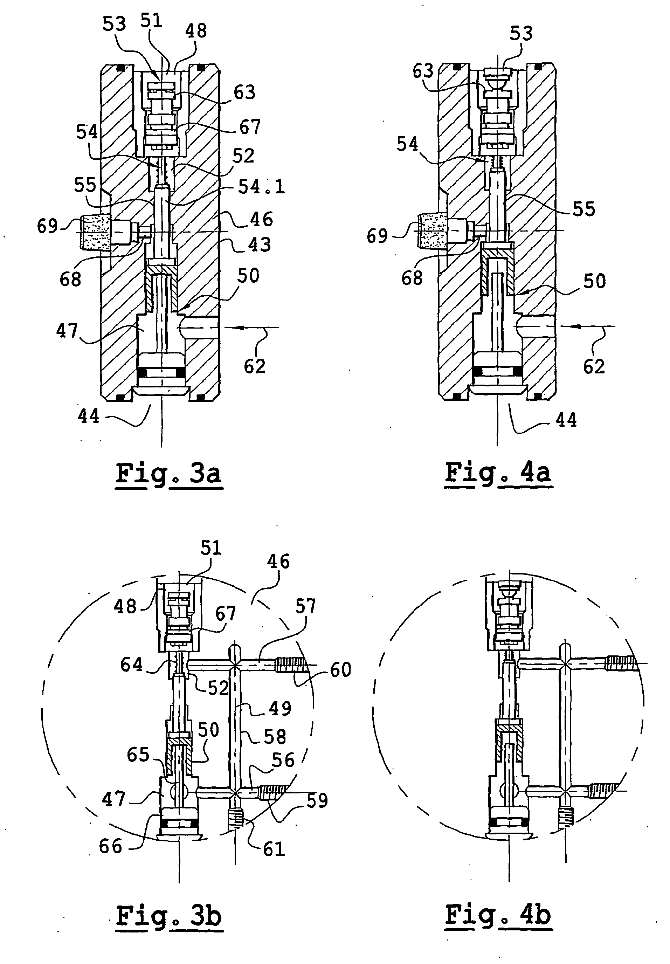

Les figures 3a à 4b montrent des exemples de réalisation de valves, ne correspondant pas à l'invention, bidirectionnelles à piston et à poussoir, comme clapets anti-retour VA à VD, respectivement en position fermée figures 3a et 3b et en position ouverte figures 4a et 4b. Ces clapets sont destinés à être montés dans une roue 20 présentée figure 2. Cette roue 20 comporte une jante 21 reliée mécaniquement à un arbre 22 tournant dans un palier 23 d'un moyeu 24. La rotation est permise par deux roulements à bille 25 et 26 parallèles et coaxiaux. Une couronne extérieure 27 de ces roulements est maintenue fixe sur le palier 23. Une couronne intérieure mobile 28 de ces roulements est solidaire de l'arbre 22. La branche 5 du conduit d'amenée 4, en aval de la vanne EVA aboutit sur un embout creux de raccordement 29. L'embout 29 est fixé à la couronne fixe 27 commune aux deux roulements à billes 25 et 26. Cet embout 29 débouche, par un conduit court 30 percé dans la couronne 27, dans une chambre annulaire 31 ménagée par deux joints à lèvres parallèles 32 et 33 dans l'espace annulaire du double roulement à billes, entre les deux chemins de roulement 25 et 26 des billes de ces roulements.

La chambre annulaire 31 est par ailleurs reliée, par exemple par l'intermédiaire d'un conduit 34 diamétral à l'arbre 22, à un segment 35 d'un conduit axial longitudinal. Le segment 35 débouche dans une chambre d'extrémité 36. La chambre 36 est de préférence circulaire, concentrique à l'axe 37 de la roue 20 et de l'arbre 22, et possède un diamètre suffisamment grand pour autoriser la mise en place d'un clapet anti-retour VA, ici de préférence circulaire, dans n'importe quelle position angulaire à l'intérieur d'un logement circulaire 38. Le logement 38 est aménagé, dans l'axe 37 de la jante 21, dans une capsule de fermeture 39. Le logement 38 est circulaire et de préférence centré sur l'axe du moyeu. Le fait d'être dans l'axe autorise ensuite le clapet à fonctionner de la même manière pour n'importe quelle position de la roue. En outre, le clapet n'est alors pas soumis aux forces centrifuges. Dans un exemple, le logement a un diamètre de 70 mm.

Pour assurer l'étanchéité du montage, l'arbre 22 est maintenu solidaire de la jante 21 par l'intermédiaire d'un joint torique d'étanchéité 40. Pour éviter par ailleurs des fuites entre la chambre 36, le clapet VA et l'extérieur, le clapet VA est monté dans le logement 38 avec deux joints toriques 41 et 42. Comme on le verra plus loin, le clapet VA possède une communication, de type anti-retour, entre une face 43 en regard de la chambre 36 et une gorge circulaire 44 aménagée entre les deux joints toriques 41 et 42. La gorge 44 débouche par ailleurs (dans le logement 38) en regard d'un conduit 45 monté de manière étanche entre la partie intérieure de la chambre 38 et la partie extérieure, mais intérieure au pneumatique 3, sur la jante 21.

En agissant ainsi, et en plaçant le clapet anti-retour VA dans le logement 38, on peut accéder à une chambre d'un pneu quelconque. On observera que du fait que des joints sont tournants, en particulier ceux montés dans le double roulement 25-26, il est préférable comme indiqué par l'invention de disposer de vannes qui, à l'état non excité, permettent de conserver la pression dans les pneus, sans autoriser de dégonflages intempestifs.

Les figures 3a à 4b montrent une valve, ne correspondant pas à l'invention, bidirectionnelle à piston et à poussoir, un clapet anti-retour tel que VA à monter dans un logement circulaire 38. Les figures 3a et 4a sont des coupes selon le plan de coupe de la figure 2, ou selon un plan passant par l'axe 37, alors que les figures 3b et 4b sont des coupes selon un plan perpendiculaire à l'axe 37. Le clapet anti-retour VA comporte une platine cylindrique circulaire 46 avec deux chambres 47 et 48 alignées dans un diamètre de la platine. Les deux chambres sont pneumatiquement reliées entre elles par un conduit 49 de communication. La première chambre 47 reçoit un piston 50 de manoeuvre. L'autre chambre 48 comporte entre une partie aval 51 et une partie amont 52 un clapet 53. Le clapet 53 est mobilisé par une tige 54 emmenée par le piston 50 de manoeuvre par l'intermédiaire d'un poussoir 54.1. Dans ce but le poussoir 54.1 passe d'une chambre 47 à l'autre 48 par un conduit 55. A l'endroit du conduit, le poussoir 54.1 possède un diamètre qui est très voisin de l'alésage du conduit 55.

Le conduit 49 de communication comporte trois alésages inclinés et sécants les uns par rapport aux autres. En pratique, ils sont de préférence perpendiculaires les uns aux autres. Deux alésages 56 et 57 débouchent respectivement dans la première chambre 47 et dans la seconde chambre 48. Le troisième alésage 58 est parallèle au diamètre selon lequel sont alignées les deux chambres. Du fait qu'ils sont sécants, les trois alésages forment ensemble le conduit 49. Ces trois alésages sont formés par des perçages réalisés à partir de la périphérie de la platine 46. Pour isoler le conduit 49 de l'extérieur, et notamment de la gorge 44, les trois alésages sont obturés par des bouchons étanches 59 à 61 à leur extrémité située en périphérie de la platine. Sur une face 43 déstinée à venir en regard de la chambre 36, la platine 46 comporte un trou 62 mettant en relation cette chambre 36 et l'intérieur de la chambre 47. Comme par ailleurs la chambre 47 est en relation avec la chambre 48 par le conduit de communication 49, on peut comprendre que la chambre 47 et la chambre 48 sont en relation avec la chambre 36, donc en définitive avec la branche 5.

Pour les figures 3b et 4b, une surpression est appliquée dans la chambre 36. Cette surpression gonfle la chambre 47, et de ce fait repousse le piston 50 et le poussoir 54.1 en direction du clapet 53. Le clapet 53 est normalement repoussé contre son siège 63 par un ressort 64 prenant appui dans la partie arrière 52 de la chambre 48 et contre une rive du poussoir 54.1. Ce faisant le clapet 53 se dégage de son siège 63, permet la communication des parties 51 et 52 de la chambre 48 par un conduit intérieur et autorise la surpression à venir gonfler la chambre 3 du pneu. Pour éviter que le piston 50 ne soit repoussé trop loin par l'effort du ressort 64, le piston est en butée sur une butée 65 introduite par l'arrière de la chambre 47. La chambre 47 est par ailleurs obturée par un bouchon étanche 66 qui maintient la butée 65. Dans l'autre chambre 48, un module 67 comportant le clapet 53 et son siège 63 est introduit dans la chambre 47 pour y ménager les deux parties 51 et 52.

Le maintien ouvert du clapet 53 au moment du dégonflage résulte de ce que de préférence la chambre 47 possède à l'endroit du piston 50 un plus grand diamètre et surtout une plus grande surface utile que la section de passage de l'air dans le conduit intérieur dans le clapet 53. Dans ce cas, même si la pression dans la chambre 47 est plus faible que la pression dans la partie 51 de la chambre 48, le clapet ne se referme pas. Ce maintien en ouverture se réalise tant que la différence de ces pressions rapportée aux surfaces où elles s'exercent est supérieure à l'effort du ressort 64.

Les alésages du conduit 55 et de la chambre 47 sont très ajustés aux diamètres respectifs du poussoir 54.1 et du piston 50 à leur endroit. Ces ajustages résultent du meilleur compromis qui autorise le coulissement du poussoir et du piston, sans permettre de fuite entre les deux chambres 47 et 48. Pour faciliter alors le fonctionnement correct de la valve bidirectionnelle à piston et à poussoir des figures 3a à 4b, on libère l'avancée du piston 50 pour qu'il puisse pénétrer plus avant dans la chambre 47. Puisqu'il peut être amené à comprimer l'air qui se trouve entre sa base et l'entrée du conduit 55, on prévoit alors d'évacuer l'air présent à cet endroit par une fuite 68 (figures 3a et 3b). Cette fuite 68 qui établit une communication entre la base du piston 50 et l'extérieur de la valve est par ailleurs surmontée d'un filtre 69. En effet, au moment où le piston recule, lorsque le clapet 53 se ferme, l'air est aspiré par la fuite 68. Avec le filtre 69, on évite que de l'air pollué vienne enrayer le mécanisme de la valve.

On remarquera par ailleurs dans le logement 38, dans la partie de ce logement qui contient le filtre 69 un percement 70 permettant l'insertion de la platine 46 dans ce logement 38. En effet, sans cette mise à l'air 70, l'insertion de la platine peut être contrariée par la présence des deux joints toriques 41 et 42. Une mise à l'air libre de cet espace autorise ainsi l'air confiné à rejoindre l'atmosphère. La raison du filtre 69 est principalement à recherche dans la présence de cette mise à l'air 70.

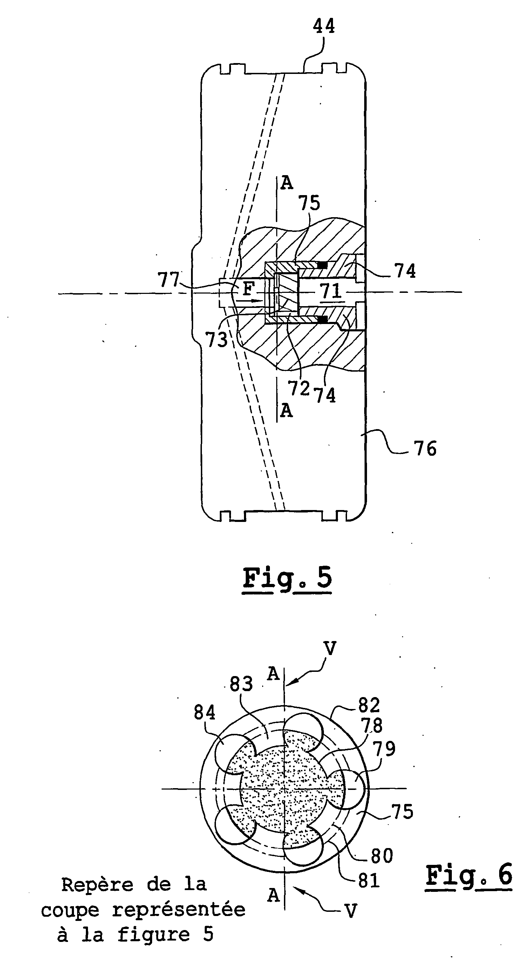

La figure 5 montre une valve 71 selon l'invention bidirectionnelle à clapet anti-retour simple ou, autrement dit, à valve différentielle libre. Cette valve 71 comporte un embout 74 qui maintient un bouchon cylindrique circulaire flottant 73 formant la valve différentielle libre. La valve est dite libre parce que le bouchon est flottant. Elle est différentielle car le bouchon est sujet à des déplacements dépendant des pressions différentielles qu'il reçoit sur chacune de ses faces circulaires. La valve 71 comporte à cet effet un premier embout 74 creux dont un alésage interne 72 est plus faible que le diamètre du bouchon 73. Elle comporte encore un capuchon 75, percé, surmontant l'embout. Le capuchon 75 possède un alésage interne dont le diamètre est plus grand que le diamètre du bouchon 73. Le capuchon 75 est monté sur l'embout 74 au moyen d'un joint, qui sert à la fois à l'étanchéité entre le capuchon 75 et l'embout 74 et entre ces pièces et une platine 76 (voir ci-dessus pour une explication relative à la platine 76). Le bouchon 73 est placé entre le capuchon et le sommet de l'embout, dans l'espace où l'alésage du capuchon est plus grand que le diamètre de ce bouchon. A cet endroit, le bouchon peut reposer au sommet de l'embout. Dans cette position de repos, il obstrue le passage de l'air dans l'embout et forme un clapet anti-retour. La valve 71 forme un clapet anti-retour qui est dit ici simple car il ne possède pas du tout de ressort, ni de poussoir, ni de piston. Le jeu de flottement diamétral du bouchon 73, dans l'alésage du capuchon 75 jouant le rôle de valve est tel que, quelle que soit la position du bouchon 73, l'alésage 72 est toujours obstrué par un simple placage du bouchon 73 au sommet de cet embout 74.

La valve 72 est montée par ailleurs dans une platine 76 du même type que la platine 46. Elle est destinée à être montée dans le logement 38 d'un moyeu. Par rapport à la valve bidirectionnelle à piston et poussoir des figures 3a à 4b, la valve 71 permet de résoudre de nombreux problèmes. Du fait de sa simplicité, sans piston ni ressort, elle est bien moins chère. N'ayant pas de poussoir, elle ne nécessite pas de fuite 68 ni de filtre 69. La valve 71 est seulement montée dans la platine 76 en regard d'un perçage 77 partant d'une face circulaire de la platine 76. Le perçage 77 ne débouche pas dans l'autre face de la platine 76. Il est sécant avec un perçage diamétral qui débouche dans la gorge 44. De préférence le perçage diamétral débouche des deux côtés du diamètre. Même le travail sur la platine 76 est ainsi bien réduit, il n'y a pas de bouchon à mettre.

Dans l'invention on a découvert par ailleurs que cette valve 71 admettait un même type de fonctionnement en dégonflage que celui décrit pour la valve à piston et à poussoir pour laquelle un tel dégonflage n'est expliqué que par la présence d'un piston possédant une face d'appui plus grande du côté d'une pression plus faible (du côté mise à l'air) que du côté d'une pression plus forte (du côté chambre du pneu). Ici, on a pu observer qu'un tel phénomène de dégonflage peut se produire parce qu'en amont de la valve 71, côté chambre du pneu, l'écoulement de l'air subissait des pertes de charges plus fortes que du côté de la fuite calibrée 11. Pour augmenter alors cet effet bénéfique (de ce point de vue) de perte de charge, on prévoit de surmonter le conduit 45, à l'endroit ou il pénètre dans la chambre 3 d'un étranglement. Cet étranglement sert essentiellement comme dispositif de perte de charge. Cet étranglement est par exemple obtenu en montant une vis percée 78 au bout du conduit 45. La vis 78 laisse passer un peu l'air, mais pas trop, de façon à ce que le gradient de pression, d'un bout (vis 78) à l'autre (fuite 11) de l'échappement soit suffisamment faible pour que le bouchon puisse continuer à flotter dans l'espace qui lui est réservé entre l'embout 74 et le capuchon 75. Avec la valve 71, on peut obtenir un dégonflage total car aucun ressort ne vient à un quelconque moment contrarier la différence de pression résultant du gradient de pression en dégonflage.

Par ailleurs, les jantes 21 peuvent être munies à titre complémentaire de valve classique 79 (figure 2). Par rapport à de telles valves classiques, les valves présentée ci-dessus permettent toutefois de ne pas engendrer de déséquilibres dans le balourd de la roue montée. En outre, du fait de leur position centrale dans le moyeu des roues, les différentes pièces des valves ne sont que peu soumises à des efforts parasites, parce qu'elles ne sont pas ou peu soumises à la force centrifuge (en particulier dans une configuration plus particulièrement avantageuse de la valve, configuration telle que les mouvements d'ouverture et de fermeture de la valve se fassent parallèlement à l'axe de rotation), qui dérèglent les équilibres précis des efforts appliqués sur les différentes pièces au moment des gonflages, dégonflages et contrôles de pression. En ce qui concerne la valve à clapet anti-retour simple, de préférence l'alésage 77 sera pratiqué dans l'axe de la platine cylindrique 76, et comme le bouchon 73 est placé en position centrale, il n'est même soumis à aucune force centrifuge. Son réglage est plus précisément atteint.

Sur la figure 6, on a représenté une forme préférée du capuchon 75. En effet si, sur la réalisation de la figure 5, la partie du bouchon 73 en regard du percement 77 est plaquée à plat contre le bord de ce percement 77, le gonflage de la chambre est rendu difficile. Il peut alors être nécessaire de la gonfler avec une faible surpression. Pour pouvoir la gonfler avec une forte surpression, on a modifié le sommet du capuchon 75 opposé à l'embout 71. Ce capuchon 75 comporte selon un perfectionnement un premier percement sommital 78, en regard de l'alésage 77 pour assurer la communication de gonflage. Ce percement 78 est agrémenté de cavités 79 placées à sa périphérie. Les cavités 79 sont de préférence circulaires. De préférence, elles ne traversent pas de part en part le sommet du capuchon 75. Elles ne sont de préférence réalisées que dans la partie interne de ce dernier. Elles sont néanmoins plus hautes que le sommet intérieur du bouchon 75. Elles chevauchent par leur profil le contour du percement 78. Le diamètre du percement 78 est inférieur au diamètre 80 du bouchon 73. Le diamètre de 80 de ce bouchon 73 est lui-même inférieur au diamètre 81 de l'intérieur du capuchon 75 dans sa partie qui reçoit ce bouchon 73. De ce fait ce bouchon 73 peut y être flottant. Le jeu de flottement tient par ailleurs compte des expansions dues aux compressions subies par le bouchon 73 lorsque la valve est fermée. Les parties excentrées des cavités 79 débordent du contour 81. Toutefois, ces parties excentrées restent en deçà du contour extérieur 82 du capuchon 75, pour assurer l'étanchéité de ce dernier. Le capuchon possède ainsi une forme intérieure en trèfle, dans un exemple à cinq feuilles.

Le fonctionnement de ce capuchon est le suivant. Lors du gonflage, le bouchon 73 est repoussé par la pression de l'air de son appui sur le sommet de l'embout 71. Par flottement dans la cavité du capuchon 75, il vient porter par sa périphérie supérieure contre des tables 83 présentes entre les cavités 79, entre les feuilles de trèfle. Les cavités 79 sont plus hautes que l'alésage 81 du capuchon 75. En reposant contre ces tables 83, le bouchon 73 crée des espaces 84 de circulation de l'air de gonflage. Ces espaces 84 sont situés dans les partie des cavités 79 qui ne sont pas occupées par le bouchon 73. Du coté de l'embout 71, les espaces 84 sont naturellement en relation avec cet embout 71, puisque le bouchon 73 est écarté de sa position de repos contre cet embout 71, et puisque les cavités 79 s'étendent de préférence depuis la partie de ce capuchon 75 qui est en appui contre l'embout 71. Du coté opposé à l'embout 71, les espaces 84 communiquent avec l'alésage 77 ou le percement 78 parce que les cavités 79 sont plus hautes que l'alésage 81 du capuchon 75. Et comme elles sont sécantes par leur profil au profil de cet alésage 81, la communication d'air est facilement établie. Signalons enfin que le bouchon 73 rend aussi possible le démontage de la roue hors du moyeu (la platine 76 restant solidaire de la roue) sans dégonfler le pneu.

## Revendications

1. Circuit de gonflage comportant une source de fluide comprimé, un conduit d'amenée du fluide comprimé, ce conduit étant relié à la source, un clapet anti-retour interposé dans le conduit d'amenée entre une chambre de réception et la source de fluide, un embranchement relié au conduit d'amenée, entre le clapet anti-retour et la source, un conduit de diversion relié à l'embranchement, et un dispositif de fuite calibrée, relié au conduit de diversion pour réaliser une fuite calibrée de fluide comprimé à partir de l'embranchement, **caractérisé en ce que** le clapet anti-retour comporte une valve différentielle libre comportant un bouchon flottant ou une pastille flottante.

2. Circuit selon la revendication 1, **caractérisé en ce que** la chambre de réception est disposée dans une roue destinée à être équipée d'un pneumatique, et **en ce que** la valve est montée dans un axe du moyeu de cette roue.

3. Circuit selon la revendication 2, **caractérisé en ce que** la valve est mobile avec la roue.

4. Circuit selon l'une des revendications 1 à 3, **caractérisé en ce qu'**il comporte un dispositif (78) de perte de charge interposé entre la chambre de réception et la valve.

5. Circuit selon l'une des revendications 1 à 4, **caractérisé en ce que** le dispositif (78) de perte de charge interposé est réglable.

6. Circuit selon l'une des revendications 1 à 5, **caractérisé en ce que** la valve différentielle libre comporte un embout creux surmonté d'un capuchon et un bouchon flottant dans un espace intérieur de ce capuchon au sommet de cet embout.

7. Circuit selon l'une des revendications 1 à 6, **caractérisé en ce que** le clapet anti-retour à valve différentielle libre comporte une platine cylindrique circulaire (76) avec un premier perçage diamétral communicant avec un second perçage partant d'une face circulaire de la platine, une valve bidirectionnelle avec un clapet anti-retour simple étant montée en regard du second perçage.

8. Circuit selon l'une des revendications 1 à 7, **caractérisé en ce que** le clapet anti-retour comporte une platine cylindrique circulaire (76) munie d'une gorge circulaire ménagée dans son chant périphérique et deux joints toriques en bordure de cette gorge.

9. Circuit selon l'une des revendications 1 à 8, **caractérisé en ce qu'**il comporte une vanne pilotée (EVGF) pour isoler la source de fluide du conduit d'amenée.

10. Circuit selon l'une des revendications 1 à 9, **caractérisé en ce qu'**il comporte une vanne (EVDG) interposée dans le conduit de diversion entre le dispositif de fuite calibrée et l'embranchement.

11. Circuit selon l'une des revendications 1 à 10, **caractérisé en ce qu'**il comporte un dispositif de mesure (CP1), de pression ou de débit, raccordé au conduit d'amenée.

12. Circuit selon l'une des revendications 1 à 11, **caractérisé en ce qu'**il comporte un circuit de régulation (µC) pour commander le dispositif de fuite calibrée à partir d'un signal délivré par un dispositif de mesure de pression ou de débit.

13. Circuit selon l'une des revendications 1 à 12, **caractérisé en ce qu'**il comporte, sur le conduit d'amenée, des embranchements supplémentaires montés entre des clapets anti-retour (VA, VB, VC, VD) de plusieurs chambres de réception et la source dé fluide, un jeu (EVA, EVB, EVC, EVD) de vannes montées sur des conduits de distribution reliés aux embranchements.

14. Circuit selon la revendication 13, **caractérisé en ce que** les vannes sont commandables indépendamment les unes des autres.

15. Circuit selon l'une des revendications 1 à 14, **caractérisé en ce que** la fuite est calibrée pour permettre un dégonflage total de la chambre en plus de 50 secondes.

16. Circuit selon l'une des revendications 1 à 15, **caractérisé en ce que** la valve comporte un capuchon à profil interne creux en trèfle.

## Claims

1. Inflation circuit comprising a compressed fluid source, a compressed fluid supply line connected to the source, a non-return valve interposed in the supply line between a reception chamber and the fluid source, a branch connected to the supply line between the non-return valve and the source, a diversion line connected to the branch, and a calibrated leak device connected to the diversion line in order to form a calibrated leak of compressed fluid from the branch, **characterised in that** the non-return valve comprises a free differential valve with a flotting stopper or a flotting plug.

2. Circuit according to claim 1, **characterised in that** the reception chamber is disposed in the wheel intended to be equipped with a tyre, and **in that** the valve is mounted in an axis of the hub of the wheel.

3. Circuit according to claim 2, **characterised in that** the valve is mobile with the wheel.

4. Circuit according to one of claims 1 to 3, **characterised in that** it comprises a loss of head device (78) interposed between the reception chamber and the valve.

5. Circuit according to one of claims 1 to 4, **characterised in that** the loss of head device (78) interposed is adjustable.

6. Circuit according to one of claims 1 to 5, **characterised in that** the free differential valve comprises a hollow ferrule surmounted by a cap and a stopper floating in an inner space of the cap at the top of the ferrule.

7. Circuit according to one of claims 1 to 6, **characterised in that** the non-return valve with a free differential valve comprises a circular cylindrical plate (76) with a first diametric perforation communicating with a second perforation starting from a circular face of the plate, a two-way valve with a simple non-return mechanism being mounted opposite to the second perforation.

8. Circuit according to one of claims 1 to 7, **characterised in that** the non-return valve comprises a circular cylindrical plate (76) equipped with a circular groove formed in its peripheral face and two toric joints bordering this groove.

9. Circuit according to one of claims 1 to 8, **characterised in that** it comprises an actuated valve (EVGF) for isolating the fluid source of the supply line.

10. Circuit according to one of claims 1 to 9, **characterised in that** it comprises a valve (EVDG) interposed in the diversion line between the calibrated leak device and the branch.

11. Circuit according to one of claims 1 to 10, **characterised in that** it comprises a pressure or output measuring device (CP1) which is connected to the supply line.

12. Circuit according to one of claims 1 to 11, **characterised in that** it comprises an adjustment circuit (µC) for controlling the calibrated leak device from a signal issued by a pressure or output measuring device.

13. Circuit according to one of claims 1 to 12, **characterised in that** it comprises, on the supply line, additional branches mounted between non-return valves (VA, VB, VC, VD) of plural reception chambers and the fluid source, and a set (EVA, EVB, EVC, EVD) of valves mounted on distribution lines connected to the branches.

14. Circuit according to claim 13, **characterised in that** the valves can be controlled independently of one another.

15. Circuit according to one of claims 1 to 14, **characterised in that** the leak is calibrated in order to permit total deflation of the chamber in more than 50 seconds.

16. Circuit according to one of claims 1 to 15, **characterised in that** the valve comprises a cap with an internal trefoil-shaped profile.

## Patentansprüche

1. Aufblaskreislauf mit einer Druckfluidquelle, einer Druckfluidzufuhrleitung, wobei diese Leitung mit der Quelle verbunden ist, einer in der Zufuhrleitung zwischen einer Aufnahmekammer und der Fluidquelle angeordneten Rückschlagklappe, einer zwischen der Rückschlagklappe und der Quelle mit der Zufuhrleitung verbundenen Abzweigung, einer mit der Abzweigung verbundenen Ablenkleitung und einer kalibrierten Leckagevorrichtung, die mit der Ablenkleitung verbunden ist, um eine kalibrierte Druckfluidleckage von der Abzweigung zu realisieren, **dadurch gekennzeichnet, dass** die Rückschlagklappe ein freies Differentialventil aufweist, das einen schwimmenden Stopfen oder eine schwimmende Scheibe aufweist.

2. Kreislauf nach Anspruch 1, **dadurch gekennzeichnet, dass** die Aufnahmekammer in einem Rad angeordnet ist, das mit einem Luftreifen versehen ist, und dass das Ventil in einer Nabenachse dieses Rads angebracht ist.

3. Kreislauf nach Anspruch 2, **dadurch gekennzeichnet, dass** das Ventil mit dem Rad beweglich ist.

4. Kreislauf nach einem der Ansprüche 1 bis 3, **dadurch gekennzeichnet, dass** er eine Ladungsverlustvorrichtung (78) aufweist, die zwischen der Aufnahmekammer und dem Ventil angeordnet ist.

5. Kreislauf nach einem der Ansprüche 1 bis 4, **dadurch gekennzeichnet, dass** die angeordnete Ladungsverlustvorrichtung (78) einstellbar ist.

6. Kreislauf nach einem der Ansprüche 1 bis 5, **dadurch gekennzeichnet, dass** das freie Differentialventil ein hohles Endstück, das von einer Kappe überlagert wird, und einen Stopfen aufweist, der in einem Innenraum dieser Kappe am Scheitel dieser Kappe schwimmt.

7. Kreislauf nach einem der Ansprüche 1 bis 6, **dadurch gekennzeichnet, dass** die Rückschlagklappe mit freiem Differentialventil eine kreisförmige zylindrische Platte (76) mit einer ersten diametralen Bohrung aufweist, die mit einer zweiten Bohrung in Verbindung steht, die von einer kreisförmigen Fläche der Platte ausgeht, wobei ein Zweiwegeventil mit einer einfachen Rückschlagklappe gegenüber der zweiten Bohrung angebracht ist.

8. Kreislauf nach einem der Ansprüche 1 bis 7, **dadurch gekennzeichnet, dass** die Rückschlagklappe eine kreisförmige zylindrische Platte (76), die mit einer kreisförmigen Nut versehen ist, welche in ihrer Umfangskante ausgebildet ist, und zwei an dieser Nut angrenzende O-Ringe aufweist.

9. Kreislauf nach einem der Ansprüche 1 bis 8, **dadurch gekennzeichnet, dass** er ein vorgesteuertes Ventil (EVGF) zum Trennen der Fluidquelle von der Zufuhrleistung aufweist.

10. Kreislauf nach einem der Ansprüche 1 bis 9, **dadurch gekennzeichnet, dass** er ein in der Ablenkleitung zwischen der kalibrierten Leckagevorrichtung und der Abzweigung angeordnetes Ventil (EVDG) aufweist.

11. Kreislauf nach einem der Ansprüche 1 bis 10, **dadurch gekennzeichnet, dass** er eine an der Zufuhrleitung angeschlossene Druck- oder Durchflussmessvorrichtung (CP1) aufweist.

12. Kreislauf nach einem der Ansprüche 1 bis 11, **dadurch gekennzeichnet, dass** er einen Regelkreis (µC) zum Ansteuern der kalibrierten Leckagevorrichtung von einem durch eine Druck- oder Durchflussmessvorrichtung abgegebenen Signal aufweist.

13. Kreislauf nach einem der Ansprüche 1 bis 12, **dadurch gekennzeichnet, dass** er an der Zufuhrleitung zusätzliche Abzweigungen, die zwischen den Rückschlagklappen (VA, VB, VC, VD) mehrerer Aufnahmekammern und der Fluidquelle angebracht sind, und einen Satz (EVA, EVB, EVC, EVD) von Ventilen, die an mit den Abzweigungen verbundenen Verteilungsleitungen angebracht sind, aufweist.

14. Kreislauf nach Anspruch 13, **dadurch gekennzeichnet, dass** die Ventile unabhängig voneinander ansteuerbar sind.

15. Kreislauf nach einem der Ansprüche 1 bis 14, **dadurch gekennzeichnet, dass** die Leckage dazu kalibriert ist, ein völliges Entleeren der Kammer in mehr als 50 Sekunden zu gestatten.

16. Kreislauf nach einem der Ansprüche 1 bis 15, **dadurch gekennzeichnet, dass** das Ventil eine Kappe mit einem inneren kleeblattförmigen Hohlprofil aufweist.
